# EUROPEAN PATENT SPECIFICATION

(11) **EP 4 293 790 B1**
(45) Date of publication and mention of the grant of the patent: **17.12.2025**
(21) Application number: 22919356.0
(22) Date of filing: 11.01.2022
(51) Int. Cl.: H01M 10/0587, G06T 7/00, H01M 10/04

(54) **METHOD, APPARATUS, AND SYSTEM FOR DETECTING ELECTRODE PLATE WINDING GAP**
MESSVERFAHREN, MESSVORRICHTUNG UND MESSSYSTEM FÜR DEN WICKELSPALT ZWISCHEN ELEKTRODENPLATTEN
PROCÉDÉ DE MESURE, APPAREIL DE MESURE ET SYSTÈME DE MESURE D'UN ESPACE D'ENROULEMENT ENTRE DES PLAQUES D'ÉLECTRODE

(43) Date of publication of application: 20.12.2023
(73) Proprietor: Contemporary Amperex Technology (Hong Kong) Limited, Central, Central And Western District (HK)
(72) Inventor: XU, Binbin, Ningde, Fujian 352100 (CN)
(74) Representative: Lorenz Seidler Gossel Part. mbB
(86) International application number: PCT/CN2022/071380
(87) International publication number: WO 2023/133690

(56) References cited:
- CN-A- 105 987 919
- CN-A- 109 444 145
- CN-A- 111 416 142
- CN-A- 113 313 711
- JP-A- 2006 145 298
- JP-A- 2006 145 298

## Description

### Technical Field

The present application relates to the field of machine visions, and particularly, to a method, apparatus, and system for detecting an electrode plate winding gap.

### Background Art

In a production process of winding battery cells, it is necessary to wind and shape an anode plate, a separator, a cathode plate, and a separator which are stacked in sequence through a winding needle. Gaps between the wound and shaped anode plate, separator, cathode plate and separator need to meet preset process requirements to ensure that a wound battery cell will not be short-circuited and in other dangerous situations.

Some existing machine vision detection solutions based on industrial cameras are used to complete detection of gaps between the wound and shaped anode plate, separator, cathode plate and separator. However, these machine vision detection solutions are limited by the structural design, cost control, and matching with actual application scenarios, and there are still many defects. The detection accuracy and the detection efficiency of these solutions need to be improved.

CN 105 987 919 A relates to an inspection apparatus for winding a winding element built in a secondary battery.

JP 2006 145298 A relates to a part or product produced by winding a strip-shaped or strip-shaped sealing material, such as an electrode of a lithium ion battery or a film capacitor, so that winding misalignment between winding layers is detected on the core of the winding device.

### Summary of the Invention

In view of the above problems, the present application provides a method, apparatus, and system for detecting an electrode plate winding gap, which can improve the efficiency and accuracy of detection of a gap between electrode plates. The invention is set out in the appended set of claims.

In a first aspect, the present application provides a method for detecting an electrode plate winding gap. The method for detecting the electrode plate winding gap includes: acquiring a first width of an anode region, a second width of a cathode region, and a third width of a protective region determined after electrode plates are cut, wherein the anode region covers a surface of a first electrode plate, and the cathode region and the protective region cover a surface of a second electrode plate; receiving sampled images of edges of two sides of a separator, the first electrode plate, and the second electrode plate after winding; determining a gap between the first electrode plate and the second electrode plate from the sampled images; and calculating a gap between the anode region and the cathode region as well as a gap between the anode region and the protective region according to the first width, the second width, the third width, and the gap between the first electrode plate and the second electrode plate.

In the technical solution of the embodiments of the present application, a detection result of the gap between the electrode plates is calculated in conjunction with width data of the electrode plates obtained in a previous electrode plate cutting process, without calibrating a camera for acquiring images in advance, which simplifies detection steps and improves the accuracy of accuracy.

In some embodiments, the method further includes: determining a gap between the first electrode plate and the separator as well as a gap between the second electrode plate and the separator from the sampled images. In the above technical solution, a method for directly calculating the gaps between the electrode plates and the separator on the basis of the acquired images of the electrode plates after winding is further provided, so as to better meet a detection requirement of a winding process.

In some embodiments, when the first electrode plate is stacked on the second electrode plate to cover a part of the protective region, the step of determining a gap between the first electrode plate and the second electrode plate from the sampled images specifically includes: determining, from the sampled images, a first gap between an edge of the anode region on a first side and an edge of the protective region on the first side. In the above technical solution, the specific method of how to quickly calculate, in the case that the first electrode plate is stacked on the second electrode plate, the gap between the protective region and the anode region on the basis of the sampled images of the electrode plates after winding is provided, which has relatively high accuracy of detection.

In some embodiments, the step of calculating a gap between the anode region and the cathode region as well as a gap between the anode region and the protective region according to the first width, the second width, the third width, and the gap between the first electrode plate and the second electrode plate specifically includes: obtaining a second gap between the edge of the anode region on the first side and an edge of the cathode region on the first side by subtracting the first gap from the third width; and obtaining a third gap between an edge of the anode region on a second side and an edge of the cathode region on the second side by subtracting the second gap and the second width from the first width in sequence. In the above technical solution, the specific method of how to use the electrode plate width data obtained in the previous electrode plate cutting process and the sampled images of the electrode plates after winding to quickly calculate, in the case that the first electrode plate is stacked on the second electrode plate, the gaps between different regions of the first electrode plate and the second electrode plate is provided, which has relatively high accuracy of detection. Moreover, the calculation method does not need to use the sampled images of the electrode plates before winding, thereby reducing a quantity of cameras that need to be arranged.

In some embodiments, the step of determining a gap between the first electrode plate and the separator from the sampled images, and the determining a gap between the second electrode plate and the separator from the sampled images specifically includes: determining a gap between an edge of the first electrode plate and an edge of the separator as well as a gap between an edge of the second electrode plate and the edge of the separator from a sampled image located on the first side; and determining a gap between the edge of the first electrode plate and the edge of the separator from a sampled image located on the second side. In the above technical solution, a method for quickly calculating the gaps between the two sides of the electrode plates and the separator according to the sampled images, which can well meet the detection requirement of the winding process.

In some embodiments, when the second electrode plate is stacked on the first electrode plate to cover a part of the anode region, the step of determining a gap between the first electrode plate and the second electrode plate from the sampled images specifically includes: determining, from the sampled images, a fourth gap between an edge of the cathode region on a second side and an edge of the anode region on the second side. In the above technical solution, the specific method of how to quickly calculate, in the case that the second electrode plate is stacked on the first electrode plate, the gap between the protective region and the anode region on the basis of the sampled images of the electrode plates after winding is provided. Because the gap calculation method does not need to use previously calibrated data, the method has relatively high accuracy of detection.

In some embodiments, the step of calculating a gap between the anode region and the cathode region as well as a gap between the anode region and the protective region according to the first width, the second width, the third width, and the gap between the first electrode plate and the second electrode plate specifically includes: obtaining a fourth width of an overlapping portion between the first electrode plate and the second electrode plate by subtracting the fourth gap from the first width; obtaining a fifth gap between the edge of the protective region on the first side and the edge of the anode region on the first side by adding the second width with the third width and subtracting the fourth width from the sum; and obtaining a sixth gap between the edge of the cathode region on the second side and the edge of the anode region on the second side by subtracting the fifth gap from the third width. In the above technical solution, the specific method of how to use the width data of the electrode plates obtained in the previous electrode plate cutting process and the sampled images of the electrode plates after winding to calculate, in the case that the second electrode plate is stacked on the first electrode plate, the gaps between different regions of the first electrode plate and the second electrode plate is provided. The gap calculation method does not need to use the sampled images of the electrode plates before winding, thereby reducing a quantity of cameras that need to be arranged.

In some embodiments, the step of determining a gap between the first electrode plate and the separator from the sampled images, and the determining a gap between the second electrode plate and the separator from the sampled images specifically includes: determining a gap between the edge of the second electrode plate and the edge of the separator from a sampled image located on the first side; and determining a gap between the edge of the second electrode plate and the edge of the separator as well as a gap between the edge of the first electrode plate and the edge of the separator from a sampled image located on the second side. In the above technical solution, a method of how to quickly calculate, in the case that the second electrode plate is stacked on the first electrode plate, the gaps between the two sides of the electrode plates and the separator on the basis of the sampled images, which can well meet the detection requirement of the winding process.

In a second aspect, the present application provides an apparatus for detecting an electrode plate winding gap. The apparatus for detecting the electrode plate winding gap includes: a width data receiving module, configured to acquire a first width of an anode region, a second width of a cathode region, and a third width of a protective region determined after electrode plates are cut, wherein the anode region covers a surface of a first electrode plate, and the cathode region and the protective region cover a surface of a second electrode plate; an image data receiving module, configured to receive sampled images that contain at least a part of edges of two sides of the first electrode plate, the second electrode plate, and a separator after winding; and a gap calculation module, configured to: determine a gap between the first electrode plate and the second electrode plate from the sampled images, and calculate a gap between the anode region and the cathode region as well as a gap between the anode region and the protective region according to the first width, the second width, the third width, and the gap between the first electrode plate and the second electrode plate.

In the technical solution of the embodiments of the present application, according to the width data of the electrode plates obtained in the previous electrode plate cutting process, a detection result of an electrode plate gap is calculated, without calibrating a camera for acquiring images in advance, which simplifies detection steps and improves the accuracy of accuracy.

In a third aspect, the present application provides a system for detecting an electrode plate winding. The system for detecting the electrode plate winding includes: at least two groups of image acquisition devices and a processor communicatively connected to the image acquisition devices. The image acquisition devices are located on two sides of a winding needle, and are configured to acquire image information of edges of two sides of a to-be-detected sample formed after a first electrode plate, a second electrode plate, and a separator are wound; The processor is configured to receive the image information acquired by the image acquisition devices to perform the above method for detecting the electrode plate winding gap.

In the technical solution of the embodiments of the present application, only electrode plate width data obtained in the previous electrode plate cutting process and the image information of the electrode plates after winding are used to calculate an electrode plate gap. Therefore, cameras for acquiring the image information before the winding of the electrode plates are reduced, and the cameras for acquiring images do not need to be calibrated in advance, which improves the accuracy of detection.

In a fourth aspect, the present application provides an electronic device. The electronic device includes a processor and a memory communicatively connected to the processor. The memory stores computer program instructions which, when invoked by the processor, causes the processor to perform the above method for detecting the electrode plate winding gap.

In the technical solution of the embodiments of the present application, the electronic device calculates a detection result of an electrode plate gap according to width data of the electrode plates obtained in the previous electrode plate cutting process, without calibrating a camera for acquiring images in advance, which simplifies detection steps and improves the accuracy of accuracy.

In a fifth aspect, the present application provides a non-volatile computer storage medium. The non-volatile computer storage medium stores computer program instructions which, when invoked by a processor, performs the above method for detecting the electrode plate winding gap.

In the technical solution of the embodiments of the present application, according to the width data of the electrode plates obtained in the previous electrode plate cutting process, a detection result of an electrode plate gap is calculated, without calibrating a camera for acquiring images in advance, which simplifies detection steps and improves the accuracy of accuracy.

The above descriptions are only a summary of the technical solutions of the present application. In order to be able to understand the technical means of the present application more clearly, the technical means can be implemented according to the content of the specification. Furthermore, in order to make the above and other objectives, features and advantages of the present application more comprehensible, specific implementations of the present application are exemplified below.

### Description of Drawings

Various other advantages and benefits will become apparent to those of ordinary skill in the art upon reading the following detailed description of the preferred implementations. The drawings are for the purpose of illustrating the preferred implementations only and are not to be considered as a limitation on the present application. Furthermore, the same components are denoted by the same reference numerals throughout the drawings. In the drawings:
FIG. 1 is a schematic structural diagram of a system for detecting an electrode plate winding gap according to some embodiments of the present application;
FIG. 2 is a schematic diagram of a first electrode plate and a second electrode plate according to some embodiments of the present application;
FIG. 3 is a flowchart of a method for detecting an electrode plate winding gap according to some embodiments of the present application;
FIG. 4a is a schematic diagram of sampled images according to some embodiments of the present application, showing a situation that a first electrode plate is stacked on a second electrode plate;
FIG. 4b is a schematic diagram of sampled images according to some other embodiments of the present application, showing a situation that a second electrode plate is stacked on a first electrode plate;
FIG. 5 is a flowchart of a method for detecting an electrode plate winding gap according to some other embodiments of the present application, showing a calculation process of gaps between electrode plates and a separator;
FIG. 6a is a flowchart of a method for detecting an electrode plate winding gap according to some embodiments of the present application, showing a gap calculation method based on the sampled images shown in FIG. 4a;
FIG. 6b is a flowchart of a method for detecting an electrode plate winding gap according to some other embodiments of the present application, showing a gap calculation method based on the sampled images shown in FIG. 4b;
FIG. 7a is a schematic diagram of a to-be-detected sample formed by winding according to some embodiments of the present application, showing a situation that a first electrode plate is stacked on a second electrode plate;
FIG. 7b is a schematic diagram of a to-be-detected sample formed by winding according to some other embodiments of the present application, showing a situation that a second electrode plate is stacked on a first electrode plate;
FIG. 8 is a schematic diagram of an apparatus for detecting an electrode plate winding gap according to some embodiments of the present application; and
FIG. 9 is a schematic diagram of an electronic device according to some embodiments of the present application.

### Detailed Description

The embodiments of the technical solutions of the present application are described in detail in combination with the accompanying drawings below. The following embodiments are only configured to more clearly illustrate the technical solutions of the present application, and therefore are only used as examples and cannot be configured to limit the scope of protection of the present application.

Unless otherwise defined, all technical and scientific terms used herein have the same meaning as commonly understood by those skilled in the art of the present application. The terms used herein are intended only for the purpose of describing specific embodiments and are not intended to limit the present application.

In the description of the embodiments of the present application, the technical terms "first", "second", and the like are only for distinguishing different objects, and may not be understood as indicating or implying the relative importance or implicitly indicating the number, specific order or primary and secondary relations of the technical features indicated. In the description of the embodiments of the present application, "plurality" means more than two, unless otherwise expressly and specifically defined.

Reference to "an embodiment" herein means that a particular feature, structure or characteristic described in conjunction with an embodiment may be included in at least one embodiment of the present application. The phrase shown in various locations in the specification may not necessarily refer to a same embodiment, and is not an independent or optional embodiment exclusive from another embodiment. It is explicitly and implicitly understood by those skilled in the art that the embodiments described herein may be combined with other embodiments.

In the descriptions of the embodiments of the present application, the term "and/or" only describes an association relation of associated objects and represents that three relations may exist. For example, A and/or B may represent three situations: A exists alone; A and B exist simultaneously; and B exists alone. In addition, the character "/" herein usually indicates an "or" relation between associated objects.

In the descriptions of the embodiments of the present application, the term "plurality" refers to more than two (including two), and similarly, "a plurality of groups" refers to more than two groups (including two groups); and "a plurality of sheets" refers to more than two sheets (including two sheets).

In the descriptions of the embodiments of present application, orientations or positional relationships indicated by the technical terms "center", "longitudinal", "transverse", "length", "width", "thickness", "upper", "lower", "front", "rear", "left", "right", "vertical", "horizontal", "top", "bottom", "inner", "outer", "clockwise", "anticlockwise", "axial", "radial", "circumferential" and the like are orientations or positional relationships as shown in the drawings, and are only for the purpose of facilitating and simplifying the descriptions of the embodiments of the present application instead of indicating or implying that devices or elements indicated must have particular orientations, and be constructed and operated in the particular orientations, so that these terms are not construed as limiting the embodiments of the present application.

In the descriptions of the embodiments of the present application, unless otherwise expressly specified and limited, the technical terms "mount," "connect", "connection", "fix" and the like should be understood in a broad sense, such as, a fixed connection, a detachable connection, an integrated connection, a mechanical connection, an electrical connection, a direct connection, an indirect connection through an intermediate medium, an internal communication of two elements, or interaction between two elements. Those of ordinary skill in the art can understand the specific meanings of the above terms in the embodiments of the present application according to specific situations.

At present, in a production flow of winding battery cells, it is necessary to wind and shape, through a winding needle, an anode plate and a cathode plate which are manufactured by processes of coating, cutting, and the like, and a separator configured to separate the anode plate from the cathode plate. In the present application, the process of winding and forming the above anode plate, cathode plate, and separator through the winding needle can be referred to as a "winding process".

After the winding process is completed, gaps between the anode plate, the cathode plate, and the separator which are stacked will be detected by means of manual or machine vision to ensure that the gaps can meet process requirements. In the present application, for simplicity of presentation, a gap between the wound anode plate and cathode plate is referred to as a "electrode plate winding gap".

After the anode plate and the cathode plate are wound and shaped, there will be a problem of mutual shielding of regions of two stacked portions. Therefore, in an electrode plate gap detection process based on machine vision, it is usually necessary to arrange a plurality of different cameras to separately acquire image information of the electrode plates before and after winding, and the gap between the anode plate and the cathode plate is calculated and determined on the basis of images acquired before winding and the image information acquired after winding.

The applicant has noticed that when the above-mentioned gap detection method is used, it is necessary to calibrate the cameras at different positions in advance before use, and generate corresponding calibration data to assist in calculating an actual distance. Therefore, an electrode plate winding gap result obtained by detection is based on the calibration data. Once there is a large deviation between the calibration data and an actual production situation, the accuracy of a detection result will be severely affected.

In order to solve the defects in the above method for detecting the electrode plate winding gap, the applicant has found that: a gap between an anode plate and a cathode plate can be calculated and determined in conjunction with width data of the anode plate and the cathode plate obtained in the previous process and image information of the electrode plates after winding. This method achieves calculation without depending on the calibration data, which can effectively simplify the steps for detecting the electrode plate winding gap, and improve the detection efficiency and detection accuracy. For example, it is not necessary to periodically repeat camera calibration to ensure the detection accuracy or it is not necessary to perform camera calibration again when a size of an electrode plate of a production line changes.

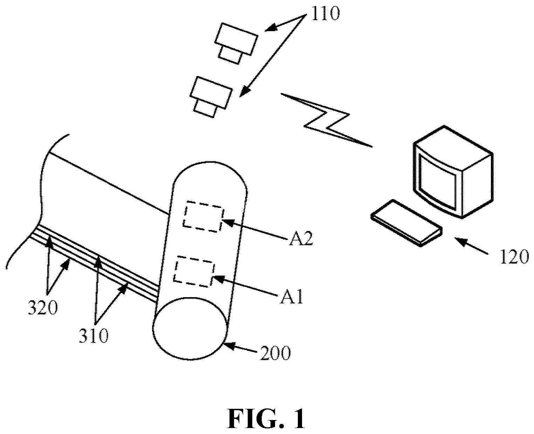

According to some embodiments of the present application, referring to FIG. 1, FIG. 1 is a schematic structural diagram of a system for detecting an electrode plate winding gap according to some embodiments of the present application. The system for detecting the electrode plate winding gap includes: at least two groups of image acquisition devices 110 and a processor 120.

The image acquisition devices 110 are devices configured to acquire image information of a specific sampling region. The image acquisition devices can be particularly any suitable type and camera. There can be two groups of image acquisition devices 110, which are respectively arranged on two sides of a winding needle 200 through any suitable type of supporting and fixing structures, face the winding needle 200, and take pictures to obtain image information of sampling regions A1 and A2. The sampling regions A1 and A2 are located on two sides of electrode plates and a separator which are wound and shaped.

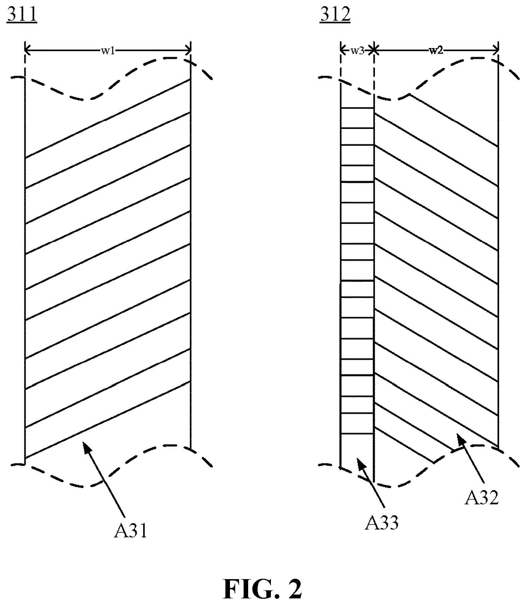

Although the two groups of image acquisition devices 110 are taken as an example in FIG. 2, those skilled in the art can understand that more image acquisition devices 110 can also be selected to be set to acquire image information in a wider range according to actual needs. It is not limited to what is shown in FIG. 2.

The processor 120 is an electronic computing device with a logical operation function, including but not limited to a server or an industrial computer. On the one hand, the processor may establish a communication connection with the image acquisition devices 110 in a wired or wireless manner, so as to receive image signals acquired by the image acquisition devices 110. On the other hand, the processor 120 also receives width data of the electrode plates. The width data of the electrode plates may come from a previous electrode plate manufacturing process, and is provided to the processor 120 through a suitable data transmission method.

During operation, electrode plates 310 and separators 320 that are manufactured in processes of coating, cutting, and the like are wound and formed through a winding needle 200 to form a to-be-detected sample in which the electrode plates and the separators are stacked in sequence. The image acquisition devices 110 periodically capture the image information of the sampling regions A1 and A2.

The image information containing at least a part of edges of two sides of the to-be-detected sample can be transmitted to the processor 120 through communication connection channels between the image acquisition devices 110 and the processor 120.

The processor 120 also receives the width data of various regions (for example, an anode region, a cathode region, and a protective region) on the electrode plates obtained in a previous process, and calculates and determines an electrode plate winding gap after performing a series of steps of a machine vision detection method such as image processing and analysis computation in conjunction with the image information captured by the image acquisition devices 110.

One of the advantages of the system for detecting the electrode plate winding gap according to the embodiments of the present application is as follows: During electrode plate detection, camera calibration data does not need to be used, so that the detection steps can be simplified, and the accuracy of detection can also be improved.

Another advantage of the system for detecting the electrode plate winding gap according to the embodiments of the present application is as follows: Since no image acquisition device configured to acquire the image information of the electrode plates before winding is required to be set, a quantity of cameras of the system for detecting the electrode plate winding gap can be reduced, and the system implementation cost can be reduced.

It should be noted that in the embodiments of the present application, two symmetrically arranged image acquisition devices are taken as an example for description. Those skilled in the art can understand that such a design is suitable for a sampling region. When a position or size of the sampling region changes, it can also select to arrange more image acquisition devices or arrange image acquisition devices at different positions according to actual needs, which will not be limited to the situation shown in FIG. 1.

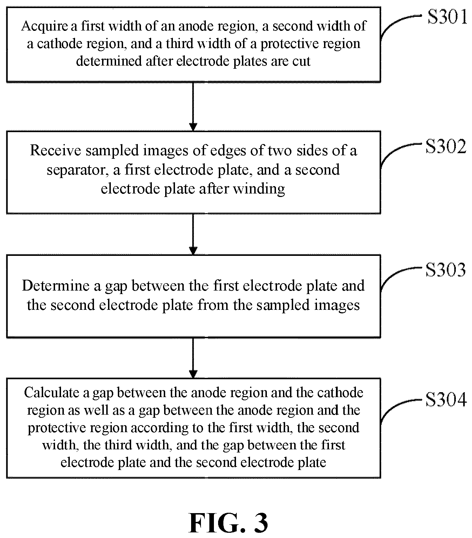

According to some embodiments of the present application, FIG. 3 is a flowchart of a method for detecting an electrode plate winding gap according to some embodiments of the present application. The method for detecting the electrode plate winding gap may be performed by the above processor. Referring to FIG. 3, the method for detecting the electrode plate winding gap includes:
S301. A first width of an anode region, a second width of a cathode region, and a third width of a protective region determined after electrode plates are cut.

A typical wound battery cell may include two electrode plates serving as an anode and a cathode. In this embodiment, the two electrode plates are respectively named "first electrode plate" and "second electrode plate". Referring to FIG. 2, the first electrode plate 311 and the second electrode plate 312 which enter a winding process are usually in the shape of long strips, and can be cut as required after the winding process is completed.

The "anode region" refers to a region A31 that is formed after coating of an anode material and covers a surface of the first electrode plate 311. The "cathode region" refers to a region A32 that is formed after a surface of the second electrode plate 312 is coated with a cathode material. The "protective region" refers to a region A33 that is formed after a surface of the second electrode plate 312 is coated with a protective material.

On a surface of the second electrode plate 312, the cathode region A32 and the protective region A33 are adjacent to cover the surface of the second electrode plate 312. **In** other words, the surface of the second electrode plate is divided into two portions: the cathode region and the protective region.

In this embodiment, the "width" refers to a length of each region extending in a direction of a rotation axis of the winding needle. The first width is denoted as w1 in FIG. 2; the second width is denoted as w2 in FIG. 2; and the third width is denoted as w3 in FIG. 2. It should be noted that the above "first", "second", and "third" are only used to distinguish different regions or electrode plates, and are not defined to limit specific implementations of the regions or electrode plates.

Specific values of the above-mentioned first width w1, second width w2, and third width w3 can be obtained through an execution device of the previous process such as coating and cutting related to the manufacturing of electrode plates, which are known data information in battery cell production. The data information can be transmitted to the processor 120 through any suitable data transmission method, such as a wireless communication network, or can be manually input to the processor 120.

S302. Sampled images of edges of two sides of a separator, the first electrode plate, and the second electrode plate after winding are received.

"Separator" is a film arranged between two electrode plates to separate an anode from a cathode of a lithium-ion battery and prevent short circuiting inside the battery. In addition, the separator 320 is a nearly transparent film relative to the first electrode plate 311 and the second electrode plate 312. The sampled images acquired in a stacked state will not cover the first electrode plate 311 and the second electrode plate 312.

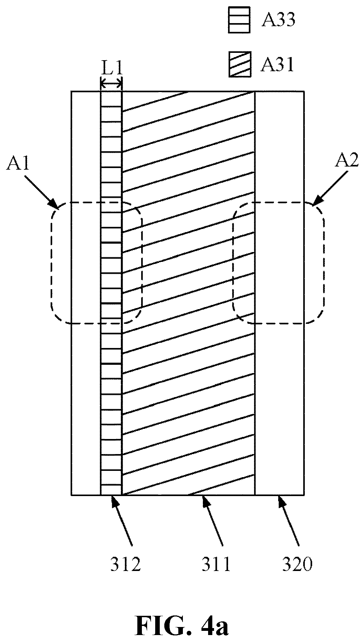

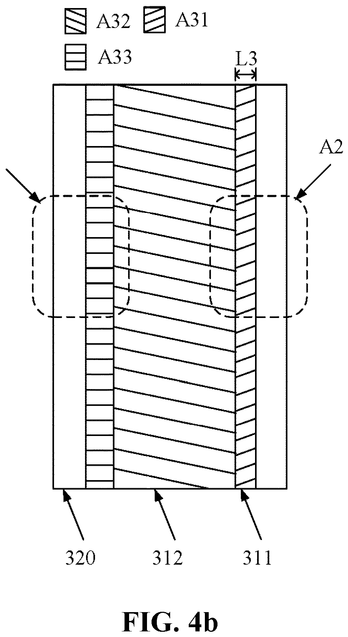

"Sampled image" is image information captured by an image acquisition device, which can reflect conditions of the edges of the two sides of the stacked electrode plates and the separator after winding by the winding needle. Specifically, a sampled image may be determined by a sampling region of the image acquisition device, for example, sampling regions shown in FIG. 4a and FIG. 4b.

S303. A gap between the first electrode plate and the second electrode plate is determined from the sampled images.

The "gap between the first electrode plate and the second electrode plate" refers to a distance between edges of the two electrode plates when the first electrode plate and the second electrode plate are stacked. Referring to FIG. 2, the strip-type first electrode plate and the strip-type second electrode plate have edges respectively located on a left side and a right side. Therefore, the "gap between the first electrode plate and the second electrode plate" may be a gap between the edges on the left side, or a gap between the edges on the right side.

Continuing to refer to FIG. 4a and FIG. 4b, in the winding process, there will be a certain distance between the first electrode plate and the second electrode plate. Therefore, no matter what stacking order is adopted, the edge of the first electrode plate and the edge of the second electrode plate can always be determined from the sampled images of the edges of one side. Correspondingly, in the sampled images on the other side, the edge of one of the electrode plates will be covered.

In the sampled images on the side where the edges of the two electrode plates can be determined, the distance between the two edges can be calculated on the basis of appropriate image processing steps, so as to obtain the gap between the first electrode plate and the second electrode plate.

S304. A gap between the anode region and the cathode region as well as a gap between the anode region and the protective region are calculated according to the first width, the second width, the third width, and the gap between the first electrode plate and the second electrode plate.

Among them, in the case that the respective widths of the anode region, the cathode region, and the protective region, and the distance between the edges of the two electrode plates on a certain side are known, a position of a covered portion can be further calculated according to a stacking relationship between the two electrode plates, thereby detecting and obtaining a desired gap detection result.

One of the advantages of the method for detecting the electrode plate winding gap according to the embodiments of the present application is as follows: By means of obtaining the width data of the respective regions provided by the previous process, during the calculation of the gaps between the protective region, the anode region, and the cathode region, there is no need to use calibration data of pre-calibration of cameras and image information of the electrode plates before winding, which effectively simplifies the detection steps, improves the accuracy of detection results, and is also conducive to quickly adapting to gap detection of electrode plates with different sizes or different types of electrode plates. Re-calibration is not required.

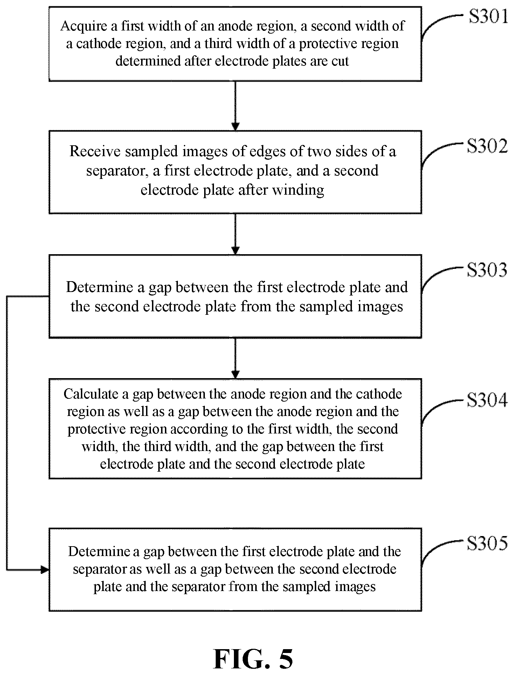

According to some embodiments of the present application, optionally, referring to FIG. 5, during the electrode plate gap detection, in addition to the step of calculating the gaps between the respective regions on the first electrode plate and the second electrode plate shown in the above-mentioned FIG. 3, the method can further include the following steps:
S305. A gap between the first electrode plate and the separator as well as a gap between the second electrode plate and the separator are determined from the sampled images.

As shown in FIG. 4a and FIG. 4b, when the first electrode plate and the second electrode plate are staggered, the edge of the first electrode plate and the edge of the second electrode plate on one side can be clearly obtained from the sampled images. However, the edges on the other side may be obtained by capturing the sampled images or may be covered depending on the stacking order of the first electrode plate and the second electrode plate. Therefore, in this embodiment, the term "gap between an electrode plate and a separator" is used to represent a distance between the edge of the first electrode plate or the second electrode plate on a certain side and an edge of the separator on the corresponding side.

Such a design can directly calculate the gaps between the electrode plates and the separator on the basis of the acquired sampled images of the electrode plates after winding, so as to ensure that the separator can fully separate the first electrode plate from the second electrode plate, and better meet the detection requirement of the winding process.

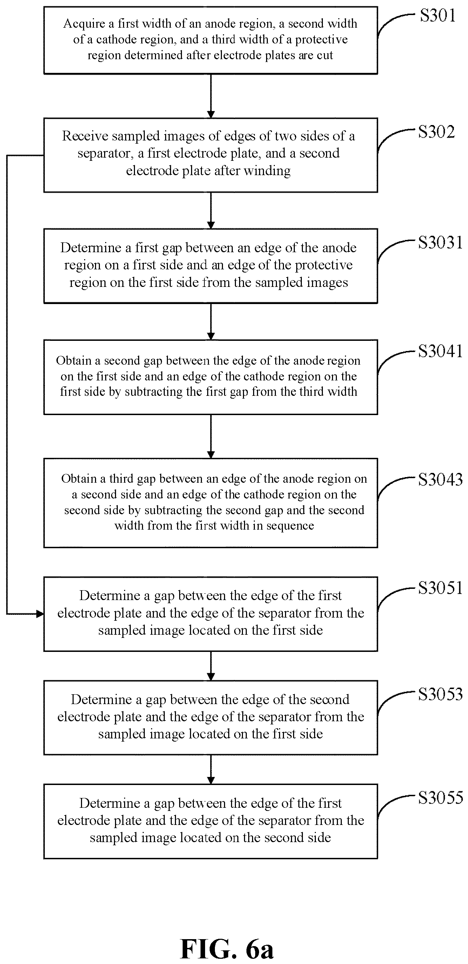

According to some embodiments of the present application, optionally, after being wound by the winding needle, the first electrode plate is stacked on the second electrode plate, and a part of the protective region is covered by the anode region of the first electrode plate (for example, a situation as shown in FIG. 4a). Referring to FIG. 6a, the above step S303 of calculating the gap between the first electrode plate and the second electrode plate specifically includes:
S3031. A first gap between an edge of the anode region on a first side and an edge of the protective region on the first side is determined from the sampled images,
wherein the "first side" refers to an edge of one side of the protective region close to the second electrode plate. For example, in the stacking method shown in FIG. 4a, the sampled image of the sampling region A1 located on the first side can simultaneously show the edges of the first electrode plate and the second electrode plate, while the sampled image located on the other side opposite to the first side only shows the edge of the first electrode plate, the edge of the second electrode plate is covered by the opaque anode region. Such a design provides how to quickly calculate the gap between the protective region and the anode region on the basis of the sampled images of the electrode plates after winding according to the electrode plate stacking method shown in FIG. 4a, and this has relatively high accuracy of detection.

According to some embodiments of the present application, optionally, continuing to refer to FIG. 6a, the above step S304 of calculating the gaps between the protective region, the cathode region, and the anode region specifically includes:
S3041. A second gap between the edge of the anode region on the first side and an edge of the cathode region on the first side is obtained by subtracting the first gap from the third width.

As shown in FIG. 4a, a position of the edge of the other side of the protective region can be determined by subtracting the first gap L1 calculated in the step S3031 from the known width of the protective region. Since the protective region and the cathode region are connected, the gap between the cathode region and the anode region on the first side can be calculated.

S3043. A third gap between an edge of the anode region on a second side and an edge of the cathode region on the second side is obtained by subtracting the second gap and the second width from the first width in sequence.

The "second side" refers to an edge of the other side opposite to the first side. **In** this embodiment, for simplicity of presentation, corresponding sides of the sampling regions A1 and A2 are referred to as "first side" and "second side" respectively.

A sum of lengths of the anode region exceeding the cathode region, that is, a sum of the gaps between the edges of the anode region on the two sides and the edges of the cathode region on the two sides, can be obtained after subtracting the second width of the cathode region from the first width of the anode region. In this way, in the case that the gap on the first side is known, the gap is subtracted from the sum of the gaps to obtain the third gap that represents a distance between the edge of the first electrode plate and the edge of the second electrode plate on the second side.

Such a design provides the method of how to use the width data of the electrode plates obtained in the previous electrode plate cutting process and the sampled images of the electrode plates after winding to calculate the gap between the anode region and the cathode region. The calculation method has relatively high accuracy of detection. Moreover, the sampled images of the electrode plates before winding do not need to be used, thereby reducing a quantity of cameras that need to be arranged.

According to some embodiments of the present application, optionally, continuing to refer to FIG. 6a, in the electrode plate stacking method shown in FIG. 4a, the step S305 of calculating the gaps between the separator and the electrode plates specifically includes:
S3051. A gap between the edge of the second electrode plate and the edge of the separator is determined from a sampled image located on the first side.

The "sampled image located on the first side" refers to image information corresponding to the sampling region A1. As shown in FIG. 4a, due to relatively high transparency of the separator, in the sampled image, the edge of the first electrode plate and the edge of the separator on this side can be directly obtained.

S3053. A gap between the edge of the second electrode plate and the edge of the separator is determined from the sampled image located on the first side.

In the stacking method shown in FIG. 4a, the edge of the second electrode plate on the first side can also be directly observed from the sampled image. Therefore, the gap between the edge of the second electrode plate and the edge of the separator can also be directly calculated and obtained from the sampled image.

S3055. A gap between the edge of the first electrode plate and the edge of the separator is determined from the sampled image located on the second side.

Correspondingly, the "sampled image located on the second side" refers to image information corresponding to the sampling region A2. As shown in FIG. 4a, the edge of the first electrode plate can be directly observed from the sampled image, so that the gap between the edge of the first electrode plate and the edge of the separator can be calculated and obtained by a suitable image processing method.

Although the edge of the second electrode plate cannot be obtained from the sampled image on the second side, considering that the distance between the edge of the second electrode plate on the second side and the edge of the separator is always greater than the distance between the edge of the first electrode plate on the second side and the edge of the separator. Therefore, in the case that the gap of the separator calculated in the step S3055 meets the process requirement, it can also be determined that the gap between the second side of the second electrode plate and the separator can always meet the process requirement.

Such a design provides the method for quickly calculating the gaps between the two sides of the electrode plates and the separator according to the sampled images on the basis of the stacking method shown in FIG. 4a, which can well meet the detection requirement of the winding process.

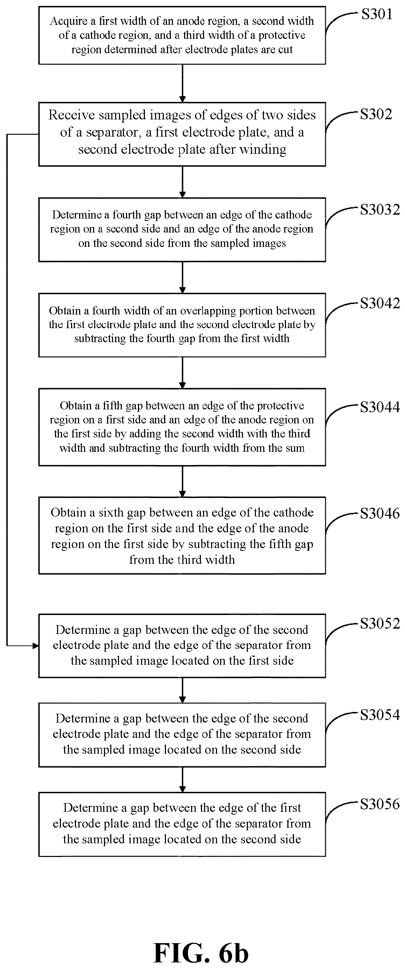

According to some embodiments of the present application, optionally, after being wound by the winding needle, the second electrode plate is stacked on the first electrode plate, and a part of the anode region is covered by the second electrode plate (for example, a situation as shown in FIG. 4b). Referring to FIG. 6b, the above step S303 of calculating the gap between the first electrode plate and the second electrode plate specifically includes:
S3032. A fourth gap between an edge of the cathode region on the second side and the edge of the anode region on the second side is determined from the sampled images.

The "second side" refers to an edge of one side of the cathode region close to the second electrode plate, or an edge where the cathode region is located. As shown in FIG. 4b, the edge of the first electrode plate and the edge of the second electrode plate can be displayed simultaneously in the sampled image located on the second side. Thus, the fourth gap L3 representing the distance between the edge of the first electrode plate on the second side and the edge of the second electrode plate on the second side can be calculated by the suitable image processing method.

Such a design provides how to quickly calculate the gap between the cathode region and the anode region on the basis of the sampled images of the electrode plates after winding according to the electrode plate stacking method shown in FIG. 4b. The previous calibration data and the image information of the electrode plates before winding do not need to be used, and this has relatively high accuracy of detection.

According to some embodiments of the present application, optionally, continuing to refer to FIG. 6b, the above step S304 of calculating the gaps between the protective region, the cathode region, and the anode region specifically includes:
S3042. A fourth width of an overlapping portion between the first electrode plate and the second electrode plate is obtained by subtracting the fourth gap from the first width.

As shown in FIG. 4b, a total length of a portion of the anode region covered by the second electrode plate can be obtained by subtracting the fourth gap from the first width. The total length may be referred to as a "fourth width" in this embodiment. A position of the anode region located at the edge of the first side can be basically determined on the basis of the fourth width.

S3044. A fifth gap between the edge of the protective region on the first side and the edge of the anode region on the first side is obtained by adding the second width with the third width and subtracting the fourth width from the sum.

The second electrode plate is composed of the cathode region and the protective region, and the width of the second electrode plate can be obtained by adding the second width with the third width. In some embodiments, optionally, the width of the second electrode plate can also be obtained directly from an execution result of the previous process.

A fifth gap representing a distance between the edge of the first electrode plate on the first side and the edge of the second electrode plate on the first side can be obtained after subtracting the fourth width from the width of the second electrode plate.

S3046. A sixth gap between the edge of the cathode region on the first side and the edge of the anode region on the first side is obtained by subtracting the fifth gap from the third width.

Width information of the anode region covered by the protective region can be obtained after the fifth gap is subtracted from the third width. In this embodiment, the "sixth gap" represents a distance between the edge of the anode region on the first side and the edge of the cathode region on the first side.

Such a design provides the method of how to use the width data of the electrode plates obtained in the previous electrode plate cutting process and the sampled images of the electrode plates after winding to calculate the gap between the anode region and the cathode region. The calculation method has relatively high accuracy of detection. Moreover, the sampled images of the electrode plates before winding do not need to be used, thereby reducing a quantity of cameras that need to be arranged.

According to some embodiments of the present application, optionally, continuing to refer to FIG. 6b, in the electrode plate stacking method shown in FIG. 4b, the step S305 of calculating the gaps between the separator and the electrode plates specifically includes:
S3052. A gap between the edge of the second electrode plate and the edge of the separator is determined from the sampled image located on the first side.

What is contrary to the above-mentioned embodiment is that due to different stacking methods of the first electrode plate and the second electrode plate, as shown in FIG. 4b, only the edge of the second electrode plate can be directly observed from the sampled image obtained in the sampling region A1.

Although the edge of the first electrode plate cannot be obtained from the sampled image on this side, considering that the distance between the edge of the first electrode plate on the first side and the edge of the separator is always greater than the distance between the edge of the second electrode plate on the first side and the edge of the separator. Therefore, in the case that the gap of the separator calculated in the step S3052 meets the process requirement, it can also be determined that the gap between the first electrode plate and the separator can always meet the process requirement.

S3054. A gap between the edge of the second electrode plate and the edge of the separator is determined from the sampled image located on the second side.

Due to the high transparency of the separator, in the sampled image corresponding to the sampling region A2, the edge of the second electrode plate on the second side and the edge of the first electrode plate on the second side can be directly observed and determined in the sampled image.

S3056. A gap between the edge of the first electrode plate and the edge of the separator is determined from the sampled image located on the second side.

Similar to the above step S3055, in the case that the edges can be determined, the gaps between the edges of the two electrode plates and the edge of the separator can be calculated and obtained by the suitable image processing method.

Such a design provides the method for quickly calculating the gaps between the two sides of the electrode plates and the separator according to the sampled images on the basis of the stacking method shown in FIG. 4b, which can well meet the detection requirement of the winding process.

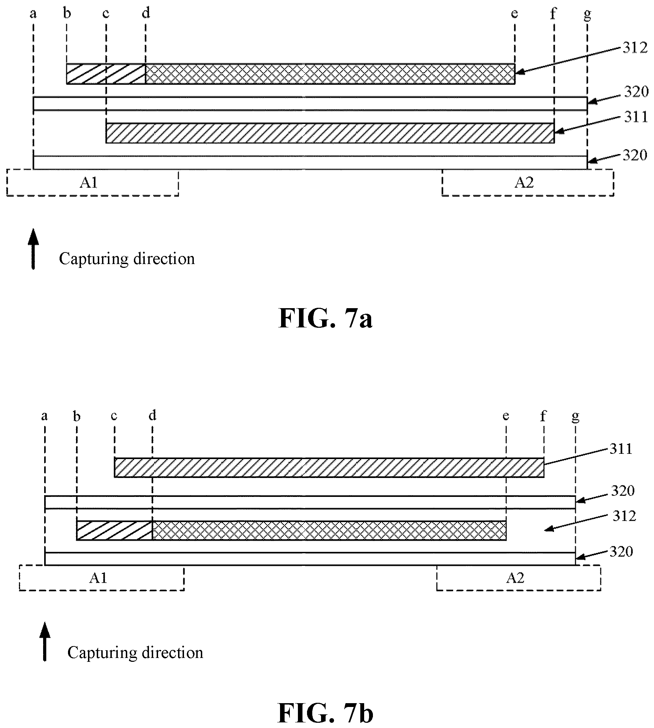

In order to fully illustrate the present application, the following describes in detail the gap detection process of the to-be-detected sample wound and shaped by the winding needle in conjunction with two electrode plate stacking methods shown in FIG. 7a and FIG. 7b.

Referring to FIG. 7a and FIG. 7b, signs a and g in the figures represent the edges of the separator 320 on the first side and the second side respectively. Signs b and d represent the edges of the protective region on the first side and the second side respectively. Signs d and e represent the edges of the cathode region on the first side and the second side respectively; and signs c and f represent the edges of the anode region on the first side and the second side respectively.

On the one hand, when the stacking relationship between the first electrode plate and the second electrode plate is as shown in FIG. 7a, calculation methods of all the above-mentioned detection items are as shown in the following table 1:

**Table 1**

| Detection items | Calculation method |
|---|---|
| L_{ab} | Obtained by detection of the sampled image of the sampling region A1 |
| L_{ac} | Obtained by detection of the sampled image of the sampling region A1 |
| L_{bc} | Obtained by detection of the sampled image of the sampling region A1 |
| L_{cd} | Determined by subtracting L_{bc} from L_{bd} |
| L_{ef} | Determined by subtracting L_{cd} and L_{de} from L_{cf} in sequence |
| L_{fg} | Obtained by detection of the sampled image of the sampling region A2 |

where Lₘₙ represents a distance between the two subscripts m and n. Thus, L_{ab} represents the distance between the second electrode plate and the separator on the first side; L_{ac} represents the distance between the first electrode plate and the separator on the first side; L_{bc} represents the distance between the protective region and the anode region on the first side; L_{cd} represents the distance between the cathode region and the anode region on the first side; L_{ef} represents the distance between the cathode region and the anode region on the second side; L_{fg} represents the distance between the cathode region and the anode region on the second side; and L_{bd} represents the width of the protective region; and L_{de} represents the width of the cathode region.

Both L_{bd} and L_{de} can be determined through the previous electrode plate manufacturing process, and are stored and recorded in a processor for easy invoking.

"Obtained by detection of the sampled image" indicates that the edge can be identified in the sampled image. Thus, the processor can calculate and obtain a distance between two edges by executing appropriate image processing steps.

On the other hand, when the stacking relationship between the first electrode plate and the second electrode plate is as shown in FIG. 7b, calculation methods of all the above-mentioned detection items are as shown in the following table 2:

**Table 2**

| Detection items | Calculation method |
|---|---|
| L_{eg} | Obtained by detection of the sampled image of the sampling region A2 |
| L_{fg} | Obtained by detection of the sampled image of the sampling region A2 |
| L_{ef} | Obtained by detection of the sampled image of the sampling region A2 |
| L_{cd} | Determined by subtracting L_{ef} and L_{de} from L_{cf} in sequence |
| L_{bc} | Determined by subtracting L_{cd} from L_{bd} |
| L_{ab} | Obtained by detection of the sampled image of the sampling region A1 |

where Lₘₙ represents a distance between the two subscripts m and n. Thus, L_{eg} represents the distance between the second electrode plate and the separator on the second side; L_{fg} represents the distance between the first electrode plate and the separator on the second side; L_{ef} represents the distance between the cathode region and the anode region on the second side; L_{cd} represents the distance between the cathode region and the anode region on the first side; L_{bc} represents the distance between the cathode region and the anode region on the first side; L_{ab} represents the distance between the second electrode plate and the separator on the second side; L_{cf} represents the width of the anode region; L_{de} represents the width of the cathode region; and L_{bd} represents the width of the cathode region.

L_{cf}, L_{bd}, and L_{de} can be determined through the previous electrode plate manufacturing process, and are stored and recorded in a processor for easy invoking.

"Obtained by detection of the sampled image" can indicate that the edges can all be identified in the sampled image because there is no cover. Thus, the processor can calculate and obtain a distance between two edges by executing appropriate image processing steps.

After the processor calculates and obtains the specific values of the above-mentioned detection items, the processor can compare the specific values with preset reference values to ensure that the gaps between the stacked first electrode plate, second electrode plate, and separator after winding. The reference values corresponding to the respective detection values can be specifically set by technicians according to the requirements of the battery cell production process, and are not specifically limited here.

One of the advantages of the gap detection method according to the embodiments of the present application is as follows: During the calculation of the desired gap detection values, it is not necessary to use the calibration data of the pre-calibration of the cameras and the image information of the electrode plates before winding. In this way, when the types or sizes of the electrode plates change, the values are quickly adjusted and adapted without performing a complicated calibration step again. Moreover, during long-term use, the accuracy of the detection results can be guaranteed without considering the problem of a large deviation between the calibration data and the actual situation.

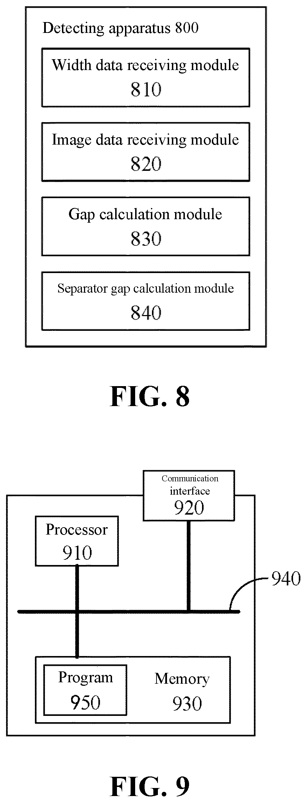

According to some embodiments of the present application, referring to FIG. 8, FIG. 8 shows an apparatus for detecting an electrode plate winding gap according to some embodiments of the present application. The apparatus 800 for detecting the electrode plate winding gap includes: a width data receiving module 810, an image data receiving module 820, and a gap calculation module 830.

The width data receiving module 810 is configured to acquire a first width of an anode region, a second width of a cathode region, and a third width of a protective region determined after electrode plates are cut, wherein the anode region covers a surface of a first electrode plate, and the cathode region and the protective region cover a surface of a second electrode plate. The image data receiving module 820 is configured to receive sampled images that contain at least a part of edges of two sides of the first electrode plate, the second electrode plate, and a separator after winding. The gap calculation module 830 is configured to: determine a gap between the first electrode plate and the second electrode plate from the sampled images, and calculate a gap between the anode region and the cathode region as well as a gap between the anode region and the protective region according to the first width, the second width, the third width, and the gap between the first electrode plate and the second electrode plate.

One of the advantages of the apparatus for detecting the electrode plate winding gap according to the embodiments of the present application is as follows: A gap between the wound and shaped electrode plates is calculated in conjunction with the width data of the respective regions obtained in a previous electrode plate cutting process, without calibrating cameras for acquiring images in advance, which simplifies detection steps and improves the accuracy of accuracy.

According to some embodiments of the present application, optionally, continuing to refer to FIG. 8, the apparatus for detecting the electrode plate winding gap further includes a separator gap calculation module 840.

The separator gap calculation module 840 is configured to determine a gap between the first electrode plate and the separator as well as a gap between the second electrode plate and the separator from the sampled images. Such a design can directly calculate the gaps between the electrode plates and the separator on the basis of the acquired sampled images of the electrode plates after winding, so as to better meet the detection requirement of the winding process.

According to some embodiments of the present application, optionally, when the first electrode plate is stacked on the second electrode plate to cover a part of the protective region, the above gap calculation module 830 is specifically configured to determine, from the sampled images, a first gap between an edge of the anode region on a first side and an edge of the protective region on the first side. Such a design provides the method for quickly calculating, in the case that the first electrode plate is stacked on the second electrode plate, the gap between the protective region and the anode region on the basis of the sampled images of the electrode plates after winding, which has relatively high accuracy of detection.

According to some embodiments of the present application, optionally, based on the calculated and determined first gap and the previously obtained width data, the gap calculation module 830 is specifically configured to: obtain a second gap between the edge of the anode region on the first side and an edge of the cathode region on the first side by subtracting the first gap from the third width; and obtain a third gap between an edge of the anode region on a second side and an edge of the cathode region on the second side by subtracting the second gap and the second width from the first width in sequence.

Such a design provides the method of how to use the width data of the electrode plates obtained in the previous electrode plate cutting process and the sampled images of the electrode plates after winding to calculate, in the case that the first electrode plate is stacked on the second electrode plate, the gaps between different regions of the first electrode plate and the second electrode plate.

According to some embodiments of the present application, optionally, when the first electrode plate is stacked on the second electrode plate to cover a part of the protective region, the above separator gap calculation module 840 is specifically configured to: determine a gap between an edge of the first electrode plate and an edge of the separator as well as a gap between an edge of the second electrode plate and the edge of the separator from a sampled image located on the first side; and determine a gap between the edge of the first electrode plate and the edge of the separator from a sampled image located on the second side. Such a design provides the method for quickly calculating the gaps between the two sides of the electrode plates and the separator according to the sampled images, which can well meet the detection requirement of the winding process.

According to some embodiments of the present application, optionally, when the second electrode plate is stacked on the first electrode plate to cover a part of the anode region, the gap calculation module 830 is specifically configured to determine, from the sampled images, a fourth gap between an edge of the cathode region on the second side and the edge of the anode region on the second side. Such a design provides the specific method for quickly calculating, in the case that the second electrode plate is stacked on the first electrode plate and that part of the anode region is covered, the gap between the protective region and the anode region on the basis of the sampled images of the electrode plates after winding.

In some embodiments, optionally, based on the calculated and determined fourth gap and the previously obtained width data, the above gap calculation module 830 is specifically configured to: obtain a fourth width of an overlapping portion between the first electrode plate and the second electrode plate by subtracting the fourth gap from the first width; obtain a fifth gap between the edge of the protective region on the first side and the edge of the anode region on the first side by adding the second width with the third width and subtracting the fourth width from the sum; and obtain a sixth gap between the edge of the cathode region on the second side and the edge of the anode region on the second side by subtracting the fifth gap from the third width.

Such a design provides the method of how to use the width data of the electrode plates obtained in the previous electrode plate cutting process and the sampled images of the electrode plates after winding to calculate, in the case that the second electrode plate is stacked on the first electrode plate and that part of the anode region is covered, the gaps between different regions of the first electrode plate and the second electrode plate.

According to some embodiments of the present application, optionally, when the second electrode plate is stacked on the first electrode plate to cover a part of the anode region, the above separator gap calculation module 840 is specifically configured to: determine a gap between the edge of the second electrode plate and the edge of the separator from a sampled image located on the first side; and determine a gap between the edge of the second electrode plate and the edge of the separator as well as a gap between the edge of the first electrode plate and the edge of the separator from a sampled image located on the second side. Such a design provides the method of how to quickly calculate, in the case that the second electrode plate is stacked on the first electrode plate and that part of the anode region is covered, the gaps between the two sides of the electrode plates and the separator on the basis of the sampled images, which can well meet the detection requirement of the winding process.

It should be noted that in the embodiments of the present application, the functional modules of the apparatus for detecting the electrode plate gap are divided according to the method steps to be performed. In some embodiments, one or more functional modules (such as the width data receiving module, the image data receiving module, the gap calculation module, and the separator gap calculation module) in a machine vision detection apparatus in the embodiments of the present application can be divided into more functional modules according to actual needs, to perform the corresponding method steps. In some other embodiments, one or more functional modules in a machine vision detection apparatus according to the embodiments of the present application can also be integrated into fewer functional modules, to perform the corresponding method steps.

According to some embodiments of the present application, referring to FIG. 9, FIG. 9 is a schematic structural diagram of an electronic device according to the embodiments of the present application. The electronic device may be any suitable type of electronic computing platform configured to implement the above apparatus for detecting the electrode plate winding gap, and a specific implementation of the electronic device will not be defined here.

The electronic device may include: a processor 910, a communication interface 920, a memory 930, and a communication bus 940.

The processor 910, the communication interface 920, and the memory 930 complete mutual communications through the communication bus 940. The communication interface 920 is used for communicatively connecting to other devices (for example, image acquisition devices). The processor 910 is configured to invoke a program 950 to execute one or more method steps in the method for detecting the electrode plate winding gap in the above-mentioned embodiments or to achieve one or more functional modules in the apparatus for detecting the electrode plate winding gap in the above-mentioned embodiments. Specifically, the program 950 may include program codes or computer operation instructions.

In this embodiment, according to the type of hardware used, the processor 910 may be a central processing unit, other general-purpose processors, a digital signal processor, an application specific integrated circuit (ASIC), a field-programmable gate array (FPGA) or other programmable logic devices, a discrete gate or transistor logic device, a discrete hardware component, and the like.

The memory 930 is configured to store the program 950. The memory 930 may include a high-speed random access memory (RAM), and may further include a non-volatile memory, for example, at least one disk memory.

The embodiments of the present application further provides a computer-readable storage medium. The computer-readable storage medium may a non-volatile computer-readable storage medium. The computer-readable storage medium stores a computer program.

The computer program, when executed by a processor, executes one or more method steps in the method for detecting the electrode plate winding gap in the above-mentioned embodiments or to achieve one or more functional modules in the apparatus for detecting the electrode plate winding gap in the above-mentioned embodiments. A complete computer program product is embodied on one or more computer-readable storage media (including but not limited to, a disk memory, a CD-ROM, an optical memory, and the like) containing the computer program disclosed in the embodiments of the present application.

It should be finally noted that: The foregoing embodiments are merely intended to describe the technical solutions of the present application, but not for limiting the present application. Although the present application is described in detail with reference to the foregoing embodiments, persons of ordinary skill in the art should understand that they may still make modifications to the technical solutions described in the foregoing embodiments or make equivalent replacements to part or all technical features thereof. In particular, the technical features mentioned in the various embodiments can be combined in any manner as long as there is no structural conflict.

## Claims

1. A method for detecting an electrode plate winding gap in a production process of winding battery cells, wherein the method comprises the steps of:
acquiring a first width (w1) of an anode region (A31), a second width (w2) of a cathode region (A32), and a third width (w3) of a protective region (A33) determined after electrode plates (310) are cut but obtained in a previous electrode plate manufacturing process, wherein the anode region (A31) covers a surface of a first electrode plate (311), and the cathode region (A32) and the protective region (A33) cover a surface of a second electrode plate (312);
receiving sampled images of edges of two sides of a separator (320), the first electrode plate (311), and the second electrode plate (312) after winding;
determining a distance in width direction between the first electrode plate (311) and the second electrode plate (312) from the sampled images; and
calculating a distance in width direction between the anode region (A31) and the cathode region (A32) as well as a gap in width direction between the anode region (A31) and the protective region (A33) according to the first width (w1), the second width (w2), the third width (w3), and the distance between the first electrode plate (311) and the second electrode plate (312).

2. The method according to claim 1, further comprising:
determining a distance in width direction between the first electrode plate (311) and the separator (320) as well as a distance in width direction between the second electrode plate (312) and of the separator (320) from the sampled images.

3. The method according to claim 2, wherein when the first electrode plate (311) is stacked on the second electrode plate (312) to cover a part of the protective region (A33), the step of determining the distance between the first electrode plate (311) and the second electrode plate (312) from the sampled images specifically comprises:
determining, from the sampled images, a first distance between an edge of the anode region (A31) on a first side and an edge of the protective region (A33) on the first side.

4. The method according to claim 3, wherein the step of calculating a gap between the anode region (A31) and the cathode region (A32) as well as a gap between the anode region (A31) and the protective region (A33) according to the first width (w1), the second width (w2), the third width (w3), and the distance between the first electrode plate (311) and the second electrode plate (312) specifically comprises:
obtaining a second gap between the edge of the anode region (A31) on the first side and an edge of the cathode region (A32) on the first side by subtracting the first gap from the third width (w3); and
obtaining a third gap between an edge of the anode region (A31) on a second side and an edge of the cathode region (A32) on the second side by subtracting the second gap and the second width (w2) from the first width (w1) in sequence.

5. The method according to claim 3, wherein the step of determining a distance between the first electrode plate (311) and the separator (320) from the sampled images, and the step of determining the distance between the second electrode plate (312) and the separator (320) from the sampled images specifically comprise:
determining a distance between an edge of the first electrode plate (311) and an edge of the separator (320) as well as a distance between an edge of the second electrode plate (312) and the edge of the separator (320) from a sampled image located on the first side; and
determining a distance between the edge of the first electrode plate (311) and the edge of the separator (320) from a sampled image located on a second side.

6. The method according to claim 2, wherein when the second electrode plate (312) is stacked on the first electrode plate (311) to cover a part of the anode region (A31), the step of determining the distance between the first electrode plate (311) and the second electrode plate (312) from the sampled images specifically comprises:
determining, from the sampled images, a fourth gap between an edge of the cathode region (A32) on a first side and an edge of the anode region (A31) on the first side.

7. The method according to claim 6, wherein the step of calculating a gap between the anode region (A31) and the cathode region (A32) as well as a gap between the anode region (A31) and the protective region (A33) according to the first width (w1), the second width (w2), the third width (w3), and the distance between the first electrode plate (311) and the second electrode plate (312) specifically comprises:
obtaining a fourth width of an overlapping portion between the first electrode plate (311) and the second electrode plate (312) by subtracting the fourth gap from the first width (w1);
obtaining a fifth gap between an edge of the protective region (A33) on the first side and the edge of the anode region (A31) on the first side by adding the second width (w2) with the third width (w3) and subtracting the fourth width from the sum; and
obtaining a sixth gap between an edge of the cathode region (A32) on a second side and an edge of the anode region (A31) on the second side by subtracting the fifth gap from the third width (w3).

8. The method according to claim 6, wherein the step of determining the distance between the first electrode plate (311) and the separator (320) from the sampled images, and the determining the distance between the second electrode plate (312) and the separator (320) from the sampled images specifically comprise:
determining a distance between an edge of the second electrode plate (312) and an edge of the separator (320) from a sampled image located on the first side; and
determining a distance between the edge of the second electrode plate (312) and the edge of the separator (320) as well as a distance between an edge of the first electrode plate (311) and the edge of the separator (320) from a sampled image located on a second side.

9. An apparatus (800) for detecting an electrode plate winding gap in a production process of winding battery cells, comprising:
a width data receiving module (810), configured to acquire a first width (w1) of an anode region (A31), a second width (w2) of a cathode region (A32), and a third width (w3) of a protective region (A33) determined after electrode plates (310) are cut but obtained in a previous electrode plate manufacturing process, the anode region (A31) covers a surface of a first electrode plate (311), and the cathode region (A32) and the protective region (A33) cover a surface of a second electrode plate (312);
an image data receiving module (820), configured to receive sampled images that contain at least a part of edges of two sides of the first electrode plate (311), the second electrode plate (312), and a separator (320) after winding;
a gap calculation module (830), configured to: determine a distance in width direction between the first electrode plate (311) and the second electrode plate (312) from the sampled images, and calculate a distance in width direction between the anode region (A31) and the cathode region (A32) as well as a distance in width direction between the anode region (A31) and the protective region (A33) according to the first width (w1), the second width (w2), the third width (w3), and the distance between the first electrode plate (311) and the second electrode plate (312).

10. A system for detecting an electrode plate winding gap in a production process of winding battery cells, comprising:
at least two groups of image acquisition devices (110), wherein the image acquisition devices (110) are located on two sides of a winding needle (200), and are configured to acquire image information of edges of two sides of a to-be-detected sample formed after a first electrode plate (311), a second electrode plate (312), and a separator (320) are wound;
a processor (120, 910) communicatively connected to the image acquisition devices (110), wherein the processor (120, 910) is configured to receive the image information acquired by the image acquisition devices (110) to perform the method for detecting an electrode plate winding gap according to any one of claims 1 to 8.

11. An electronic device, comprising: a processor (120, 910) and a memory (930) communicatively connected to the processor (120, 910), wherein the memory (930) stores computer program instructions which, when invoked by the processor (120, 910), causes the processor (120, 910) to perform the method for detecting an electrode plate winding gap according to any one of claims 1 to 8.

12. A non-volatile computer storage medium storing computer program instructions which, when invoked by a processor (120, 910), performs the method for detecting an electrode plate winding gap according to any one of claims 1 to 8.

## Patentansprüche

1. Verfahren zum Erfassen eines Wickelspalts zwischen Elektrodenplatten in einem Produktionsprozess zum Wickeln von Batteriezellen, wobei das Verfahren die folgenden Schritte umfasst:
Erfassen einer ersten Breite (w1) eines Anodenbereichs (A31), einer zweiten Breite (w2) eines Kathodenbereichs (A32) und einer dritten Breite (w3) eines Schutzbereichs (A33), die bestimmt werden, nachdem Elektrodenplatten (310) geschnitten, aber in einem vorherigen Elektrodenplatten-Herstellungsprozess erhalten wurden, wobei der Anodenbereich (A31) eine Oberfläche einer ersten Elektrodenplatte (311) bedeckt und der Kathodenbereich (A32) und der Schutzbereich (A33) eine Oberfläche einer zweiten Elektrodenplatte (312) bedecken;
Empfangen von abgetasteten Bildern von Kanten zweier Seiten eines Separators (320), der ersten Elektrodenplatte (311) und der zweiten Elektrodenplatte (312) nach dem Wickeln;
Bestimmen eines Abstands in Breitenrichtung zwischen der ersten Elektrodenplatte (311) und der zweiten Elektrodenplatte (312) anhand der abgetasteten Bilder; und
Berechnen eines Abstands in Breitenrichtung zwischen dem Anodenbereich (A31) und dem Kathodenbereich (A32) sowie eines Spalts in Breitenrichtung zwischen dem Anodenbereich (A31) und dem Schutzbereich (A33) gemäß der ersten Breite (w1), der zweiten Breite (w2), der dritten Breite (w3) und dem Abstand zwischen der ersten Elektrodenplatte (311) und der zweiten Elektrodenplatte (312).

2. Verfahren nach Anspruch 1, ferner mit dem folgenden Schritt:
Bestimmen eines Abstands in Breitenrichtung zwischen der ersten Elektrodenplatte (311) und dem Separator (320) sowie eines Abstands in Breitenrichtung zwischen der zweiten Elektrodenplatte (312) und dem Separator (320) anhand der abgetasteten Bilder.

3. Verfahren nach Anspruch 2, wobei dann, wenn die erste Elektrodenplatte (311) auf die zweite Elektrodenplatte (312) gestapelt wird, um einen Teil des Schutzbereichs (A33) abzudecken, der Schritt des Bestimmens des Abstands zwischen der ersten Elektrodenplatte (311) und der zweiten Elektrodenplatte (312) anhand der abgetasteten Bilder speziell Folgendes umfasst:
Bestimmen eines ersten Abstands zwischen einem Rand des Anodenbereichs (A31) auf einer ersten Seite und einem Rand des Schutzbereichs (A33) auf der ersten Seite anhand der abgetasteten Bilder.

4. Verfahren nach Anspruch 3, wobei der Schritt des Berechnens eines Spalts zwischen dem Anodenbereich (A31) und dem Kathodenbereich (A32) sowie eines Spalts zwischen dem Anodenbereich (A31) und dem Schutzbereich (A33) gemäß der ersten Breite (w1), der zweiten Breite (w2), der dritten Breite (w3) und dem Abstand zwischen der ersten Elektrodenplatte (311) und der zweiten Elektrodenplatte (312) speziell Folgendes umfasst:
Erhalten eines zweiten Spalts zwischen dem Rand des Anodenbereichs (A31) auf der ersten Seite und einem Rand des Kathodenbereichs (A32) auf der ersten Seite durch Subtrahieren des ersten Spalts von der dritten Breite (w3); und
Erhalten eines dritten Spalts zwischen einem Rand des Anodenbereichs (A31) auf einer zweiten Seite und einem Rand des Kathodenbereichs (A32) auf der zweiten Seite durch Subtrahieren des zweiten Spalts und der zweiten Breite (w2) von der ersten Breite (w1) in Folge.

5. Verfahren nach Anspruch 3, wobei der Schritt des Bestimmens eines Abstands zwischen der ersten Elektrodenplatte (311) und dem Separator (320) anhand der abgetasteten Bilder und der Schritt des Bestimmens des Abstands zwischen der zweiten Elektrodenplatte (312) und dem Separator (320) anhand der abgetasteten Bilder speziell Folgendes umfassen:
Bestimmen eines Abstands zwischen einem Rand der ersten Elektrodenplatte (311) und einem Rand des Separators (320) sowie eines Abstands zwischen einem Rand der zweiten Elektrodenplatte (312) und dem Rand des Separators (320) anhand eines auf der ersten Seite befindlichen abgetasteten Bildes; und
Bestimmen eines Abstandes zwischen dem Rand der ersten Elektrodenplatte (311) und dem Rand des Separators (320) anhand eines auf einer zweiten Seite befindlichen abgetasteten Bildes.

6. Verfahren nach Anspruch 2, wobei dann, wenn die zweite Elektrodenplatte (312) auf die erste Elektrodenplatte (311) gestapelt wird, um einen Teil des Anodenbereichs (A31) abzudecken, der Schritt des Bestimmens des Abstands zwischen der ersten Elektrodenplatte (311) und der zweiten Elektrodenplatte (312) anhand der abgetasteten Bilder speziell Folgendes umfasst:
Bestimmen eines vierten Spalts zwischen einem Rand des Kathodenbereichs (A32) auf einer ersten Seite und einem Rand des Anodenbereichs (A31) auf der ersten Seite anhand der abgetasteten Bilder.

7. Verfahren nach Anspruch 6, wobei der Schritt des Berechnens eines Spalts zwischen dem Anodenbereich (A31) und dem Kathodenbereich (A32) sowie eines Spalts zwischen dem Anodenbereich (A31) und dem Schutzbereich (A33) gemäß der ersten Breite (w1), der zweiten Breite (w2), der dritten Breite (w3) und dem Abstand zwischen der ersten Elektrodenplatte (311) und der zweiten Elektrodenplatte (312) speziell Folgendes umfasst:
Erhalten einer vierten Breite eines überlappenden Abschnitts zwischen der ersten Elektrodenplatte (311) und der zweiten Elektrodenplatte (312) durch Subtrahieren des vierten Spalts von der ersten Breite (w1);
Erhalten eines fünften Spalts zwischen einem Rand des Schutzbereichs (A33) auf der ersten Seite und dem Rand des Anodenbereichs (A31) auf der ersten Seite durch Addieren der zweiten Breite (w2) zu der dritten Breite (w3) und Subtrahieren der vierten Breite von der Summe; und
Erhalten eines sechsten Spalts zwischen einem Rand des Kathodenbereichs (A32) auf einer zweiten Seite und einem Rand des Anodenbereichs (A31) auf der zweiten Seite durch Subtrahieren des fünften Spalts von der dritten Breite (w3).

8. Verfahren nach Anspruch 6, wobei der Schritt des Bestimmens des Abstands zwischen der ersten Elektrodenplatte (311) und dem Separator (320) anhand der abgetasteten Bilder und der Schritt des Bestimmens des Abstands zwischen der zweiten Elektrodenplatte (312) und dem Separator (320) anhand der abgetasteten Bilder speziell Folgendes umfassen:
Bestimmen eines Abstandes zwischen einem Rand der zweiten Elektrodenplatte (312) und einem Rand des Separators (320) anhand eines auf der ersten Seite befindlichen abgetasteten Bildes; und
Bestimmen eines Abstands zwischen dem Rand der zweiten Elektrodenplatte (312) und dem Rand des Separators (320) sowie eines Abstands zwischen einem Rand der ersten Elektrodenplatte (311) und dem Rand des Separators (320) anhand eines auf einer zweiten Seite befindlichen abgetasteten Bildes.

9. Vorrichtung (800) zum Erfassen eines Wickelspalts zwischen Elektrodenplatten in einem Produktionsprozess zum Wickeln von Batteriezellen, umfassend:
ein Breitendaten-Empfangsmodul (810), das dazu ausgebildet ist, eine erste Breite (w1) eines Anodenbereichs (A31), eine zweite Breite (w2) eines Kathodenbereichs (A32) und eine dritte Breite (w3) eines Schutzbereichs (A33) zu erfassen, die bestimmt werden, nachdem Elektrodenplatten (310) geschnitten, aber in einem vorherigen Elektrodenplatten-Herstellungsprozess erhalten wurden, der Anodenbereich (A31) eine Oberfläche einer ersten Elektrodenplatte (311) bedeckt und der Kathodenbereich (A32) und der Schutzbereich (A33) eine Oberfläche einer zweiten Elektrodenplatte (312) bedecken;
ein Bilddaten-Empfangsmodul (820), das dazu ausgebildet ist, abgetastete Bilder zu empfangen, die zumindest einen Teil der Ränder von zwei Seiten der ersten Elektrodenplatte (311), der zweiten Elektrodenplatte (312) und eines Separators (320) nach dem Wickeln enthalten;
ein Spaltberechnungsmodul (830), das dazu ausgebildet ist, einen Abstand in Breitenrichtung zwischen der ersten Elektrodenplatte (311) und der zweiten Elektrodenplatte (312) anhand der abgetasteten Bilder zu ermitteln und einen Abstand in Breitenrichtung zwischen dem Anodenbereich (A31) und dem Kathodenbereich (A32) sowie einen Abstand in Breitenrichtung zwischen dem Anodenbereich (A31) und dem Schutzbereich (A33) gemäß der ersten Breite (w1), der zweiten Breite (w2), der dritten Breite (w3) und den Abstand zwischen der ersten Elektrodenplatte (311) und der zweiten Elektrodenplatte (312) zu berechnen.

10. System zum Erfassen eines Wickelspalts zwischen Elektrodenplatten in einem Produktionsprozess zum Wickeln von Batteriezellen, umfassend:
mindestens zwei Gruppen von Bilderfassungsvorrichtungen (110), wobei die Bilderfassungsvorrichtungen (110) auf zwei Seiten einer Wickelnadel (200) angeordnet sind und dazu ausgebildet sind, Bildinformationen von Rändern von zwei Seiten einer zu erfassenden Probe zu erfassen, die gebildet wird, nachdem eine erste Elektrodenplatte (311), eine zweite Elektrodenplatte (312) und ein Separator (320) gewickelt wurden;
einen Prozessor (120, 910), der mit den Bilderfassungsvorrichtungen (110) kommunikativ verbunden ist, wobei der Prozessor (120, 910) dazu ausgebildet ist, die von den Bilderfassungsvorrichtungen (110) erfassten Bildinformationen zu empfangen, um das Verfahren zum Erfassen eines Wickelspalts zwischen Elektrodenplatten nach einem der Ansprüche 1 bis 8 durchzuführen.

11. Elektronische Vorrichtung, umfassend: einen Prozessor (120, 910) und einen Speicher (930), der mit dem Prozessor (120, 910) kommunikativ verbunden ist, wobei der Speicher (930) Computerprogrammbefehle speichert, die, wenn sie von dem Prozessor (120, 910) aufgerufen werden, den Prozessor (120, 910) dazu veranlassen, das Verfahren zum Erfassen eines Wickelspalts zwischen Elektrodenplatten nach einem der Ansprüche 1 bis 8 durchzuführen.

12. Nichtflüchtiges Computerspeichermedium, das Computerprogrammbefehle speichert, die, wenn sie von einem Prozessor (120, 910) aufgerufen werden, das Verfahren zum Erfassen eines Wickelspalts zwischen Elektrodenplatten nach einem der Ansprüche 1 bis 8 durchführen.

## Revendications

1. Procédé de détection d'un espace d'enroulement entre des plaques d'électrode dans un processus de production d'enroulement de cellules de batterie, le procédé comprenant les étapes suivantes :
acquérir une première largeur (w1) d'une région d'anode (A31), une deuxième largeur (w2) d'une région de cathode (A32) et une troisième largeur (w3) d'une région protectrice (A33) déterminées après que les plaques d'électrode (310) ont été découpées mais obtenues lors d'un processus antérieur de fabrication de plaques d'électrode, dans lequel la région d'anode (A31) couvre une surface d'une première plaque d'électrode (311), et la région de cathode (A32) et la région protectrice (A33) couvrent une surface d'une deuxième plaque d'électrode (312) ;
recevoir des images échantillonnées des bords de deux côtés d'un séparateur (320), de la première plaque d'électrode (311) et de la deuxième plaque d'électrode (312) après enroulement ;
déterminer une distance dans la direction de largeur entre la première plaque d'électrode (311) et la deuxième plaque d'électrode (312) à partir des images échantillonnées ; et
calculer une distance dans la direction de largeur entre la région d'anode (A31) et la région de cathode (A32) ainsi qu'un espace dans la direction de largeur entre la région d'anode (A31) et la région protectrice (A33) selon la première largeur (w1), la deuxième largeur (w2), la troisième largeur (w3), et la distance entre la première plaque d'électrode (311) et la deuxième plaque d'électrode (312).

2. Procédé selon la revendication 1, comprenant en outre :
déterminer une distance dans la direction de largeur entre la première plaque d'électrode (311) et le séparateur (320) ainsi qu'une distance dans la direction de largeur entre la deuxième plaque d'électrode (312) et le séparateur (320) à partir des images échantillonnées.

3. Procédé selon la revendication 2, dans lequel lorsque la première plaque d'électrode (311) est empilée sur la deuxième plaque d'électrode (312) pour couvrir une partie de la région protectrice (A33), l'étape de détermination de la distance entre la première plaque d'électrode (311) et la deuxième plaque d'électrode (312) à partir des images échantillonnées comprend spécifiquement :
déterminer, à partir des images échantillonnées, une première distance entre un bord de la région d'anode (A31) sur un premier côté et un bord de la région protectrice (A33) sur le premier côté.

4. Procédé selon la revendication 3, dans lequel l'étape de calculer un espace entre la région d'anode (A31) et la région de cathode (A32) ainsi qu'un espace entre la région d'anode (A31) et la région protectrice (A33) selon la première largeur (w1), la deuxième largeur (w2), la troisième largeur (w3), et la distance entre la première plaque d'électrode (311) et la deuxième plaque d'électrode (312) comprend spécifiquement :
obtenir un deuxième espace entre le bord de la région d'anode (A31) du premier côté et un bord de la région de cathode (A32) du premier côté en soustrayant le premier espace de la troisième largeur (w3) ; et
obtenir un troisième espace entre un bord de la région d'anode (A31) sur un deuxième côté et un bord de la région de cathode (A32) sur le deuxième côté en soustrayant le deuxième espace et la deuxième largeur (w2) de la première largeur (w1) dans l'ordre.

5. Procédé selon la revendication 3, dans lequel l'étape de détermination d'une distance entre la première plaque d'électrode (311) et le séparateur (320) à partir des images échantillonnées, et l'étape de détermination de la distance entre la deuxième plaque d'électrode (312) et le séparateur (320) à partir des images échantillonnées comprennent spécifiquement :
déterminer une distance entre un bord de la première plaque d'électrode (311) et un bord du séparateur (320) ainsi qu'une distance entre un bord de la deuxième plaque d'électrode (312) et le bord du séparateur (320) à partir d'une image échantillonnée située sur le premier côté ; et
déterminer une distance entre le bord de la première plaque d'électrode (311) et le bord du séparateur (320) à partir d'une image échantillonnée située sur un deuxième côté.

6. Procédé selon la revendication 2, dans lequel lorsque la deuxième plaque d'électrode (312) est empilée sur la première plaque d'électrode (311) pour couvrir une partie de la région d'anode (A31), l'étape de détermination de la distance entre la première plaque d'électrode (311) et la deuxième plaque d'électrode (312) à partir des images échantillonnées comprend spécifiquement :
déterminer, à partir des images échantillonnées, un quatrième espace entre un bord de la région de cathode (A32) sur un premier côté et un bord de la région d'anode (A31) sur le premier côté.

7. Procédé selon la revendication 6, dans lequel l'étape de calculer un espace entre la région d'anode (A31) et la région de cathode (A32) ainsi qu'un espace entre la région d'anode (A31) et la région protectrice (A33) selon la première largeur (w1), la deuxième largeur (w2), la troisième largeur (w3), et la distance entre la première plaque d'électrode (311) et la deuxième plaque d'électrode (312) comprend spécifiquement :
obtenir une quatrième largeur d'une partie de chevauchement entre la première plaque d'électrode (311) et la deuxième plaque d'électrode (312) en soustrayant le quatrième espace de la première largeur (w1) ;
obtenir un cinquième espace entre un bord de la région protectrice (A33) sur le premier côté et le bord de la région d'anode (A31) sur le premier côté en ajoutant la deuxième largeur (w2) à la troisième largeur (w3) et en soustrayant la quatrième largeur de la somme ; et
obtenir un sixième espace entre un bord de la région de cathode (A32) sur un deuxième côté et un bord de la région d'anode (A31) sur le deuxième côté en soustrayant le cinquième espace de la troisième largeur (w3).

8. Procédé selon la revendication 6, dans lequel l'étape de détermination de la distance entre la première plaque d'électrode (311) et le séparateur (320) à partir des images échantillonnées, et l'étape de détermination de la distance entre la deuxième plaque d'électrode (312) et le séparateur (320) à partir des images échantillonnées comprennent spécifiquement :
déterminer une distance entre un bord de la deuxième plaque d'électrode (312) et un bord du séparateur (320) à partir d'une image échantillonnée située sur un premier côté ; et
déterminer une distance entre le bord de la deuxième plaque d'électrode (312) et le bord du séparateur (320) ainsi qu'une distance entre un bord de la première plaque d'électrode (311) et le bord du séparateur (320) à partir d'une image échantillonnée située sur un deuxième côté.

9. Appareil (800) pour détecter un espace d'enroulement de plaques d'électrode dans un processus de production d'enroulement de cellules de batterie, comprenant :
un module de réception de données de largeur (810), configuré pour acquérir une première largeur (w1) d'une région d'anode (A31), une deuxième largeur (w2) d'une région de cathode (A32), et une troisième largeur (w3) d'une région protectrice (A33) déterminée après les plaques d'électrode (310) sont coupées mais obtenues lors d'un processus de fabrication de plaques d'électrode précédent, la région d'anode (A31) couvrant une surface d'une première plaque d'électrode (311), et la région de cathode (A32) et la région protectrice (A33) couvrant une surface d'une deuxième plaque d'électrode (312) ;
un module de réception des données d'image (820), configuré pour recevoir des images échantillonnées qui contiennent au moins une partie des bords de deux côtés de la première plaque d'électrode (311), de la deuxième plaque d'électrode (312) et d'un séparateur (320) après l'enroulement ;
un module de calcul d'espace (830), configuré pour : déterminer une distance dans la direction de largeur entre la première plaque d'électrode (311) et la deuxième plaque d'électrode (312) à partir des images échantillonnées, et calculer une distance dans la direction de largeur entre la région d'anode (A31) et la région de cathode (A32) ainsi qu'une distance dans la direction de largeur entre la région d'anode (A31) et la région protectrice (A33) selon la première largeur (w1), la deuxième largeur (w2), la troisième largeur (w3), et la distance entre la première plaque d'électrode (311) et la deuxième plaque d'électrode (312).

10. Système pour détecter un espace d'enroulement de plaques d'électrode dans un processus de production d'enroulement de cellules de batterie, comprenant :
au moins deux groupes de dispositifs d'acquisition d'images (110), dans lesquels les dispositifs d'acquisition d'images (110) sont situés sur deux côtés d'une aiguille d'enroulement (200), et sont configurés pour acquérir des informations d'image des bords de deux côtés d'un échantillon à détecter formé après l'enroulement d'une première plaque d'électrode (311), d'une deuxième plaque d'électrode (312), et d'un séparateur (320) ;
un processeur (120, 910) connecté de manière communicative aux dispositifs d'acquisition d'images (110), dans lequel le processeur (120, 910) est configuré pour recevoir les informations d'images acquises par les dispositifs d'acquisition d'images (110) afin d'exécuter le procédé de détection d'un espace d'enroulement de plaques d'électrode selon l'une quelconque des revendications 1 à 8.

11. Dispositif électronique comprenant : un processeur (120, 910) et une mémoire (930) connectée de manière communicative au processeur (120, 910), dans lequel la mémoire (930) stocke des instructions de programme informatique qui, lorsqu'elles sont invoquées par le processeur (120, 910), amènent le processeur (120, 910) à exécuter le procédé de détection d'un espace d'enroulement de plaques d'électrode selon l'une quelconque des revendications 1 à 8.

12. Support de stockage informatique non volatile stockant des instructions de programme informatique qui, lorsqu'elles sont invoquées par un processeur (120, 910), exécute le procédé de détection d'un espace d'enroulement de plaques d'électrode selon l'une quelconque des revendications 1 à 8.
